# EUROPÄISCHE PATENTANMELDUNG

(11) **EP 3 281 716 A2**
(43) Veröffentlichungstag der Anmeldung: **14.02.2018**
(21) Anmeldenummer: 17185415.1
(22) Anmeldetag: 08.08.2017
(51) Int. Cl.: B21D 11/06, B23K 37/04, B23K 37/053

(54) **DREHAUFNAHME UND MONTAGEANORDNUNG**

(30) Priorität: 09.08.2016 DE 202016104378 U
(71) Anmelder: Tube-Tec Rohrverformungstechnik GmbH, 57647 Nistertal (DE)
(72) Erfinder: Deller, Matthias, 56477 Rennerod (DE)
(74) Vertreter: MFG Patentanwälte Meyer-Wildhagen Meggle-Freund Gerhard PartG mbB

(57) **Zusammenfassung**

Die Erfindung betrifft eine Drehaufnahme (2) für ein Werkstück (10), insbesondere eine Rohrschlangenanordnung, mit einer das Werkstück umgebenden Drehringanordnung (3), die eine konzentrisch zu einer Drehachse (7) verlaufende, eine geschlossene Außenkontur (15) bildende, äußere Profilringanordnung (4) aufweist, eine innere Halteanordnung (9) zur Aufnahme des Werkstücks (10) innerhalb der Außenkontur (15) und eine Koppelstruktur (8) zur Kopplung der Profilringanordnung (4) mit der Halteanordnung (9), wobei die Drehringanordnung (3) mehrere in Umfangsrichtung koppelbare Ringsegmente (1) umfasst. Die Erfindung betrifft weiter eine Montageanordnung mit einer erfindungsgemäßen Drehaufnahme (2).

## Beschreibung

### GEBIET DER ERFINDUNG

Die vorliegende Erfindung bezieht sich auf eine Drehaufnahme für ein Werkstück und insbesondere auf eine Drehaufnahme für eine Rohrschlangenanordnung.

### HINTERGRUND DER ERFINDUNG

Zur Herstellung und Montage von schweren Rohr- und Behälterbauteilen sind Drehvorrichtungen bekannt. Die Behälterschüsse (zylindrische Rohr/-Behältersegmente) bzw. Rohrelemente werden zur Herstellung, zur Bearbeitung oder zur Montage auf mehrere Rollen eines Drehwerks gelagert, so dass die zentrale Rohrachse als Drehachse horizontal und parallel zu den ebenfalls horizontal verlaufenden Drehachsen der Rollen verläuft.

Beim Verdrehen der Rollen über einen Antrieb wird das darauf liegende Werkstück (Rohr, Behälterbauteil) um seine Achse verdreht, so dass beliebige Bereiche des Werkstücks in eine gewünschte Arbeitsposition verdreht werden können.

Das Einstellen gewünschter Arbeitspositionen ist insbesondere in der Schweißfertigung wünschenswert, da es bevorzugte Arbeitspositionen für die Fertigung von Schweißnähten gibt, bei denen diese rationell und qualitativ hochwertig ausgeführt werden können. Auch für die Zugänglichkeit von bestimmten Arbeitsbereichen kann das Verdrehen eines Werkstücks in eine bestimmte Arbeitslage wünschenswert sein.

Bei der Herstellung von Rohrschlangenanordnungen ist es ebenfalls wünschenswert, bestimmte Bereiche für die Montage, die Bearbeitung und die Herstellung leicht zugänglich bzw. in bevorzugte Arbeits- bzw. Schweißpositionen zu bringen. Bei Rohrschlangenanordnungen handelt es sich meist um schraubenartig verlaufende Rohrsysteme, die sich wendelartig um eine Längsachse erstrecken und insgesamt eine rohr- bzw. rohrmantelförmige Außenkontur definieren.

Wegen der Lücken zwischen den Rohrschlangenelementen sind herkömmliche Drehwerke mit relativ schmalen Rollen für Rohrschlangenanordnungen ungeeignet. Bei den meisten Rohrschlangensystemen sind in der Regel auch über deren Außenkontur lokal hinausstehende Elemente vorhanden, die einen Einsatz der bekannten Drehvorrichtungen verhindern.

Auch Drehvorrichtungen, die lange Drehwalzen zur Aufnahme des Werkstücks aufweisen, sind für Rohschlangenanordnungen nur eingeschränkt verwendbar - selbst wenn es keine über die Außenkontur hinausstehenden Element gibt -, da die Schrauben- bzw. Wendelstruktur beim Verdrehen auf solchen Rollen eine der Steigung entsprechende Axialbewegung verursacht, die bei der Bearbeitung hinderlich ist. Das Werkstück wandert beim Verdrehen entlang der Längsachse und muss daher während der Bearbeitung in aufwendigen Arbeitsschritten wieder versetzt werden.

Stirnseitig (an den axialen Enden des Werkstücks) anbringbare Drehvorrichtungen wie z.B. Drehkipptische stehen für sehr große und schwere Rohrschlangenanordnungen oftmals aus Gewichtsgründen in der passenden Dimensionierung nicht zur Verfügung.

Es besteht also die Aufgabe, bekannte Rollendrehvorrichtungen auch für die Bearbeitung und Herstellung und Bearbeitung von Rohrschlangen oder aber auch von anderen Werkstücken zur Verfügung zu stellen.

### ZUSAMMENFASSUNG DER ERFINDUNG

Nach einem ersten Aspekt stellt die vorliegende Erfindung eine Drehaufnahme für ein Werkstück, insbesondere eine Rohrschlangenanordnung zur Verfügung, die aufweist:
Eine das Werkstück umgebende Drehanordnung, die eine konzentrisch zu einer Drehachse verlaufende äußere Profilringanordnung aufweist, eine innere Halteanordnung zur Aufnahme des Werkstücks und eine Koppelstruktur zur Kopplung der Drehringanordnung mit der Halteanordnung, wobei die Drehringanordnung mehrere, in Umfangsrichtung koppelbare Ringsegmente umfasst.

Nach einem zweiten Aspekt stellt die vorliegende Erfindung eine Montageanordnung bereit, mit einer ersten und zweiten Drehringanordnung, die koaxial zueinander angeordnet, eine Rohrschlangenanordnung aufnehmend über die Drehringanordnung drehbar auf einem Drehwerk angeordnet sind, so dass die Rohrschlangenanordnung zur Bearbeitung in eine beliebige Drehstellung bringbar ist.

Weitere Aspekte und Merkmale der vorliegenden Erfindung ergeben sich aus den abhängigen Ansprüchen, der beigefügten Zeichnung und der nachfolgenden Beschreibung bevorzugter Ausführungsformen.

### KURZBESCHREIBUNG DER ZEICHNUNG

Ausführungsformen der Erfindung werden nun beispielhaft und unter Bezugnahme auf die beigefügte Zeichnung beschrieben, darin zeigt:
- Fig. 1: eine perspektivische Ansicht eines Ringsegments für eine erfindungsgemäße Drehaufnahme;
- Fig. 2: eine Ansicht von vorne, des in Fig. 1 dargestellten Ringsegments;
- Fig. 3: eine perspektivische Darstellung einer erfindungsgemäßen Montageanordnung mit einer ersten und zweiten Drehaufnahme; und
- Fig. 4: ein weiteres Ausführungsbeispiel einer erfindungsgemäßen Montageanordnung mit einer ersten und zweiten erfindungsgemäßen Drehaufnahme sowie einer dritten Drehaufnahme.

### BESCHREIBUNG VON AUSFÜHRUNGSFORMEN

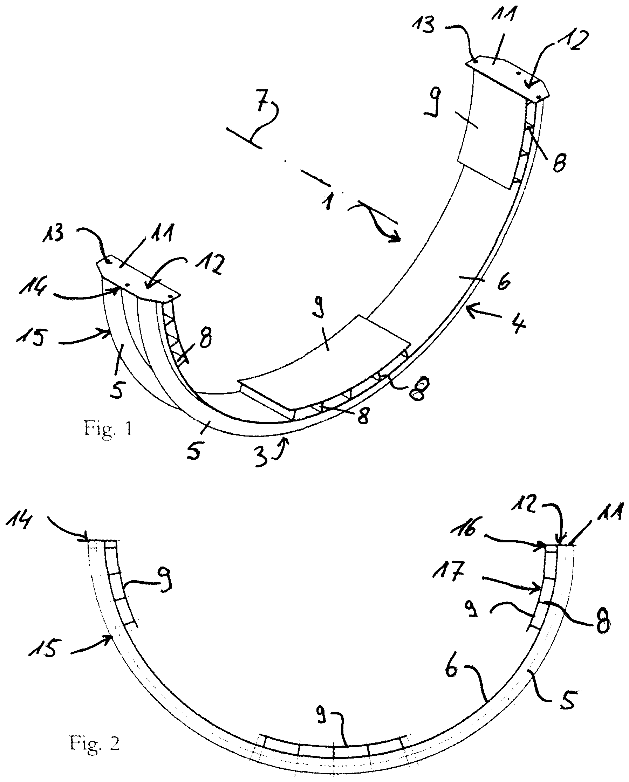

In Fig. 1 ist eine Ausführungsform in Übereinstimmung mit der vorliegenden Erfindung veranschaulicht. Vor einer detaillierten Beschreibung folgen zunächst allgemeine Erläuterungen zu den Ausführungsformen.

Die erfindungsgemäße Drehaufnahme zeichnet sich dadurch aus, dass sie zur Aufnahme beliebiger Werkstücke und insbesondere auch für die Aufnahme unterschiedlicher Rohrschlangenanordnungen angepasst werden kann. Weiterhin ist sie einfach zu montieren bzw. zu demontieren und schließlich ist sie auch für die Nutzung auf nahezu allen handelsüblichen Drehwerken geeignet bzw. kann an zur Verfügung stehende Drehwerke angepasst werden.

Dazu weißt die Drehaufnahme eine das Werkstück umgebende Drehringanordnung auf, die eine konzentrisch zu einer Drehachse verlaufende äußere Profilringanordnung aufweist. Die äußere Profilringanordnung bildet die Schnittstelle zu einem Drehwerk und dient dazu, die Gewichtslasten des Werkstücks (und der Drehaufnahme) in das Drehwerk einzuleiten. Weiter dient sie dazu, die über das Drehwerk ausgeübten Drehbewegungen auf das Werkstück zu übertragen. Dazu ist eine zur Aufnahme des Werkstücks ausgebildete innere Halteanordnung vorgesehen, die über eine Koppelstruktur mit der Drehringanordnung verbunden ist und geeignet ist, das Werkstück innerhalb der Drehaufnahme zu fixieren.

Bei unsymmetrischen Werkstücken kann die Halteanordnung so ausgebildet sein und über die Koppelstruktur so innerhalb der Drehringanordnung angeordnet sein, dass der Schwerpunkt des Werkstücks idealerweise in oder wenigstens nahe der Drehachse angeordnet wird.

Die Drehringanordnung weist mehrere in Umfangsrichtung koppelbare Ringsegmente auf. Damit ist die Drehaufnahme teilbar und kann aus mehreren Segmenten zusammengesetzt werden. Dies ermöglicht es, das Werkstück an beliebigen Stellen mit einer Drehaufnahme zu versehen, und zwar ohne dass diese in Richtung der Drehachse aufgeschoben werden müssten. Vielmehr kann das Werkstück an beliebigen Stellen mit Segmenten versehen werden. Diese Ringsegmente werden dann um die verbleibenden Segmenten ergänzt, die dann zusammen jeweils eine Drehaufnahme bilden (einen vollständigen Ring), in der oder denen dann das Werkstück drehbar fixiert ist.

Dazu gibt es Ausführungen, bei denen die Ringsegmente jeweils an ihren Enden eine Koppeleinrichtung aufweisen, über welche die Ringsegmente (einer Drehaufnahme) lösbar aneinander fixierbar sind. Dies erlaubt eine einfache Montage und Demontage. Dabei sind die Koppeleinrichtungen radial innerhalb der Außenkontur der äußeren Profilringanordnung und/oder radial außerhalb der Halteanordnung angeordnet. So beeinträchtigen die Koppeleinrichtungen den Drehvorgang der Drehaufnahme auf einem Drehwerk nicht.

Die Außenkontur verläuft glatt und ohne Stufen oder Sprünge über die radiale Außenkontur der äußeren Profilringanordnung und der Koppeleinrichtungen.

Dadurch dass die Koppeleinrichtungen auch oder zusätzlich außerhalb der Halteanordnung angeordnet sind, behindern sie auch nicht die Aufnahme des Werkstücks oder ragen in die Werkstückkontur hinein.

Es gibt Ausführungen, bei denen die Koppeleinrichtung eine Koppelplatte mit einer Koppelfläche umfasst, und die Koppelplatte mit von Befestigungselementen durchsetzbaren Ausnehmungen versehen ist. Solche Koppelplatten stellen eine simple und robuste Koppeleinrichtung dar, die mit einfachen Befestigungselementen (z.B. Schraubverbindungen) aneinander fixierbar sind.

Dabei gibt es Ausführungen, bei denen die aneinander fixierbaren Koppeleinrichtungen jeweils entsprechende Zentrierelemente aufweisen, welche ineinandergreifend eine Montage der Ringsegmente festlegen. Solche "selbstfallenden" Koppeleinrichtungen erleichtern die Montage und Demontage. Bei so einer Ausführung kommen bspw. die Ausnehmungen zur Aufnahme der Befestigungselemente schon beim Zusammensetzen der Ringsegmente in ihre fluchtende Montagestellung.

Es gibt auch Ausführungen, bei denen die Zentrierelemente bspw. als aus einer Koppeleinrichtung herausstehende Schraubenden ausgebildet sind, die dann in die entsprechenden Ausnehmungen der daran zu koppelnden Gegenplatte eingreifen.

Es gibt Ausführungen, bei denen die Halteanordnung ein Sattelelement aufweist, das zur Aufnahme des Werkstücks form- und/oder kraftschlüssig mit diesem koppelbar ist. So ein, gegebenenfalls auch austauschbares, Sattelelement dient als Schnittstelle zum Werkstück und kann bspw. an dessen Außenkontur angepasst werden.

Es ist auch möglich, ein solches Sattelelement über zusätzliche Befestigungseinrichtungen mit dem Werkstück zu verbinden.

Für einfache Rohrschlangenanordnungen kann ein Sattelelement dienen, das als gekrümmte Sattelschale ausgebildet ist, deren Krümmung der Krümmung der Rohrschlangenkontur entspricht. Durch entsprechende Dimensionierung der Ringsegmente und der Sattelschale ist es möglich, beim Fixieren der Ringsegmente aneinander eine Umfangsspannung aufzubauen, welche die gekrümmten Sattelschalen so fest an die Rohrschlangen drückt, dass die Rohrschlangenanordnung reibschlüssig und insbesondere gegen Verdrehen gesichert in der Drehaufnahme fixierbar ist.

Es gibt auch Ausführungen, bei denen die Profilringanordnung einen oder mehrere parallel verlaufende Profilringbögen umfasst, wobei die Profilringquerschnitte unterschiedliche Gestalten aufweisen können. Sie können z.B. rohr-, halbrohr-, T-, U-, Doppel-T- oder L-förmig sein. Damit können gegebenenfalls auch Profilierungen realisiert werden, die bspw. an die Rollprofile einer Drehrolle eines Drehwerks angepasst sind.

Eine erfindungsgemäße Montageanordnung mit einer ersten und zweiten Drehaufnahme, die koaxial zueinander angeordnet eine Rohrschlangenanordnung aufnehmen und über die Drehringanordnung drehbar auf einem Drehwerk angeordnet sind, erlauben es, die Rohrschlangenanordnung zur Bearbeitung in eine beliebige Drehstellung zu bringen.

In einer anderen Ausführung weist die Montageanordnung neben einer ersten und zweiten Drehaufnahme eine dritte Drehaufnahme auf, die so ausgebildet ist, axial verlaufende Enden der Rohrschlangenanordnung abstützend aufzunehmen und wenigstens ein Ringsegment mit dem Drehwerk zu koppeln.

So eine Ausführung löst das Problem, dass bei vielen Rohrschlangen neben den spiralförmigen Rohrschlangenanordnungen auch daran anschließende, in Längsrichtung verlaufende Rohrenden angeordnet sind, die ohne entsprechende Aufnahme durch ihr zum Teil erhebliches Eigengewicht die Positionierung der einzelnen Rohrschlangen untereinander beeinträchtigen können. So eine Drehaufnahme kann bspw. im einfachsten Fall als Kreisscheibe ausgebildet sein, die zur Aufnahme der axial verlaufenden Enden der Rohrschlangenanordnung Ausnehmungen aufweist und kann dann zur Lagerung auf die Rohrenden aufgeschoben werden, die dann durch die Scheibe in der gewünschten Lage abgestützt sind.

In anderen Ausführungen ist es auch möglich, die Rohrenden über mehr oder weniger radial angeordnete Schlitze von außen in die Aufnahmen einzubringen. Es können auch zusätzlich Fixiermittel, wie etwa Spannbänder verwendet werden, um die Rohrschlangenenden in der dritten Drehaufnahme zu fixieren. Die Drehaufnahme weist weiter optional wenigstens ein Ringsegment auf, welches mit dem Drehwerk koppelbar ist, so dass zumindest über einen bestimmten Winkel-/Umfangsbereich eine Abstützung auf dem Drehwerk realisiert werden kann.

In anderen Ausführungen können auch mehrere Ringsegmente vorgesehen werden, die gemeinsam einen geschlossenen Ring bilden, so dass auch bei einer montierten dritten Drehaufnahme eine Drehung der Rohrschlangenanordnung um 360° realisierbar ist.

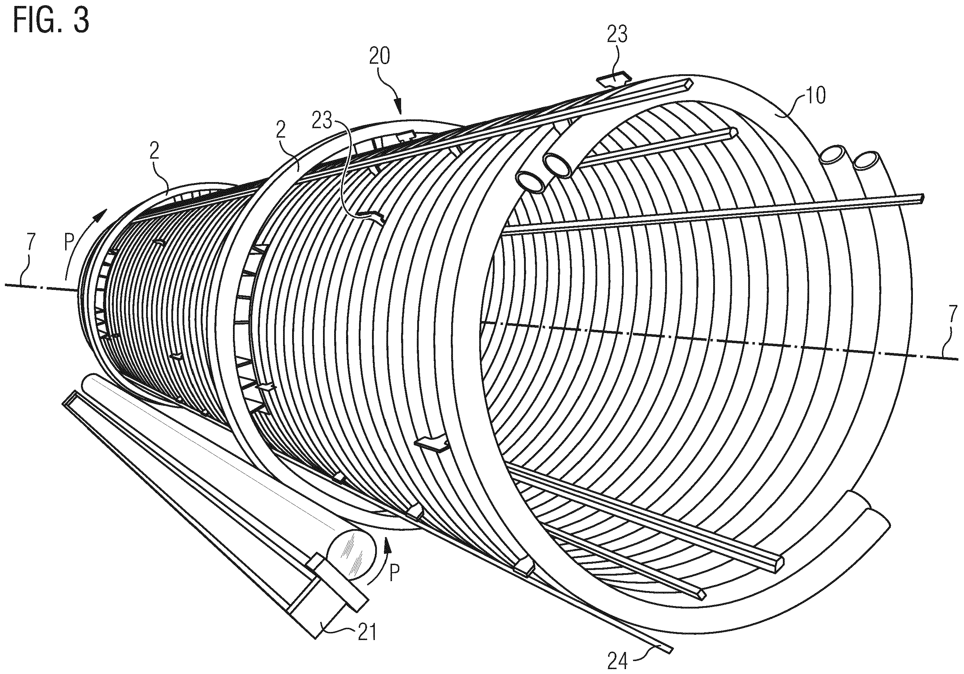

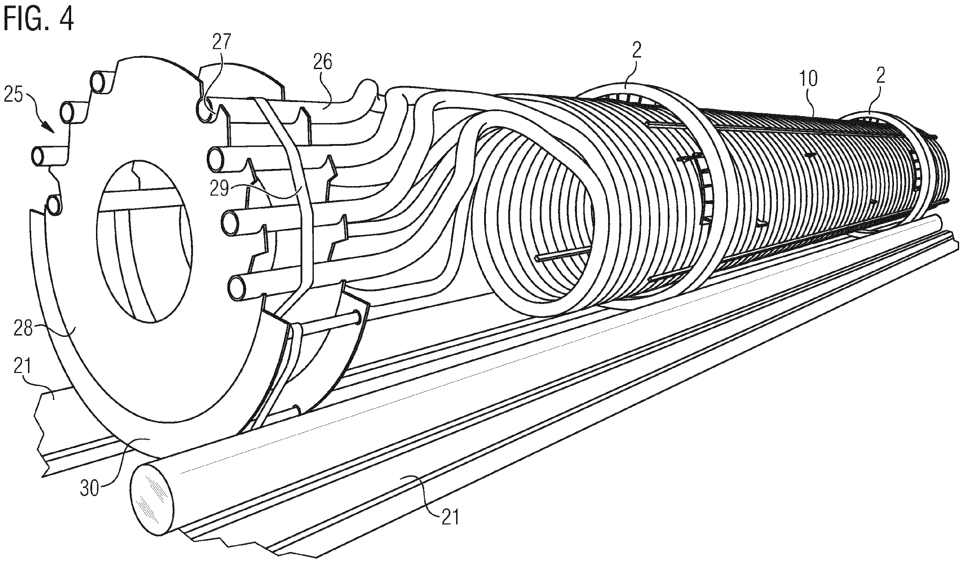

Die Figuren 1 und 2 zeigen ein Ringsegment 1, das jeweils eine Hälfte einer erfindungsgemäßen Drehaufnahme 2 bildet (s. Fig. 3 und 4).

Jedes Ringsegment 1 umfasst eine Drehringanordnung 3, die eine Profilringanordnung 4 umfasst, die hier aus zwei Rohrprofilen 5 und einer die Rohrprofile 5 koppelnden Halbschale 6 gebildet wird. Die Rohrprofile 5 sind dabei mit der Halbschale 6 verschweißt. Anstelle der Ausführung mit dem dargestellten Rohrprofil 5 können auch andere übliche Profile verwendet werden, wie Halbrohre, T-Profile, U-Profile, Doppel-T-Profile oder L-Profile. Es gibt auch Ausführungen, bei denen nur ein Profil 5 verwendet wird, oder solche, bei denen die Halbschale 6 allein die Profilringanordnung 4 bildet.

Das Ringsegment 1 verläuft mit einer Außenkontur 15 um eine Längs- oder Drehachse 7. An der Halbschale 6 der Profilringanordnung 4 sind über eine Koppelstruktur bildende Stegbleche 8 gekrümmte Sattelschalen 9 befestigt, die jeweils eine Halteanordnung bilden, die zur Aufnahme des Werkstücks (hier einer Rohrschlangenanordnung 10) dient (in Fig. 1 und 2 nicht dargestellt, s. Fig. 3 und 4).

An den Enden des Ringsegments 1 ist jeweils eine als Koppeleinrichtung dienende Koppelplatte 11 vorgesehen, die jeweils eine Koppelfläche 12 aufweist und mehrere Schraubenlöcher 13, die zur Aufnahme einer Schraubverbindung dienen.

Zur Montage einer kompletten Drehaufnahme 2 werden zwei Ringsegmente 1 jeweils mit den Koppelplatten 11 aneinander gefügt und so ausgerichtet, dass die Schraubenlöcher 13 der aneinander liegenden Koppelflächen 12 miteinander fluchten, so dass ein Schraubelement eingesetzt und verschraubt werden kann.

Die Gestaltung der Koppelplatten 11 ist so, dass der radiale Außenrand 14 der Koppelplatte 11 nicht über die radiale Außenkontur 15 der Profilringanordnung 4 hinaussteht. Damit wird sichergestellt, dass die Koppelplatte 11 die Rollkontur (Außenkontur 15) nicht beeinträchtigt. Für den radialen Innenrand 16 der Koppelplatte 11 gilt das Gleiche hinsichtlich der Innenkontur 17 der Sattelschalen 9. So ist ebenfalls sichergestellt, dass die Koppelplatten 11 nicht in die Kontur des aufzunehmenden Werkstücks, sprich in die Kontur der Rohrschlangenanordnung 10, eingreifen.

Fig. 3 zeigt eine Montageanordnung 20 mit einer ersten und zweiten Drehaufnahme 2, die jeweils aus zwei Ringsegmenten 1 gebildet werden, die über ihre Koppelplatten 11 miteinander verschraubt sind und dabei in den gekrümmten Sattelschalen 9 die Rohrschlangenanordnung 10 aufnehmen und fixieren.

Über die Drehaufnahmen 2 ist die Rohrschlangenanordnung 10 auf einem Drehwerk 21 gelagert, das mindestens eine Antriebswalze 22 wenigstens eine weitere Loswalze umfasst. Durch Verdrehen der Antriebswalze 22 in Pfeilrichtung p wird die Rohrschlangenanordnung in Pfeilrichtung P um die Achse 7 verdreht. Fig. 3 zeigt, dass die Drehaufnahme 2 in ihrem Durchmesser so gestaltet ist, dass die Außenkontur 15 radial über Montageelemente 23 und Leisten 24 hinaussteht, so dass diese den Drehvorgang nicht behindern.

In Fig. 4 ist eine erweiterte Montageanordnung dargestellt, die eine dritte Drehaufnahme 25 zeigt, die zur Aufnahme axial verlaufender Rohrenden 26 dient. Dabei werden die Rohrenden 26 in der dritten Rohraufnahme 25 in entsprechenden Ausnehmungen 27 gehalten, die von außen in die dritte Drehaufnahme 25 bildende Stützscheiben 28 eingreifen. Dabei werden die Rohrenden über Spannbänder 29 in den Ausnehmungen fixiert. Im unteren Bereich ist ein Segment 30 einer die Stützscheibe 28 umgebenden Ring(segment)anordnung dargestellt.

Bei vollständiger Montage ist ein weiteres Segment 30 vorgesehen (nicht dargestellt), das dann die Bereiche mit den Ausnehmungen 27 für die Rohrenden 26 übergreift, so dass auch bei der dritten Drehaufnahme 25 eine geschlossene Ringkontur entsteht und die Rohrschlangenanordnung 10 vollständig auf dem Drehwerk 21 gedreht werden kann.

In anderen Montageanordnungen mit erfindungsgemäßen Drehaufnahmen können auch andere nicht-zylindrische Werkstücke (z.B. Apparatebauteile) aufgenommen werden.

Weitere Ausführungen und Variationen der Erfindung ergeben sich für den Fachmann im Rahmen der Ansprüche.

**BEZUGSZEICHEN**

| | | | |
|---|---|---|---|
| 1 | Ringsegment | 21 | Drehwerk |
| 2 | Drehaufnahme | 22 | Antriebswalze |
| 3 | Drehringanordnung | 23 | Montageelement |
| 4 | Profilringanordnung | 24 | Leiste |
| 5 | Rohrprofil | 25 | dritte Drehaufnahme |
| 6 | Halbschale | 26 | Rohrende |
| 7 | Achse | 27 | Ausnehmung |
| 8 | Stegblech | 28 | Stützscheibe |
| 9 | gekrümmte Sattelschale | 29 | Spannband |
| 10 | Rohrschlangenanordnung | 30 | Segment |
| 11 | Koppelplatte | P | Drehrichtung Antrieb |
| 12 | Koppelfläche | P | Drehrichtung Werkstück |
| 13 | Schraubenloch | | |
| 14 | radialer Außenrand | | |
| 15 | Außenkontur | | |
| 16 | radialer Innenrand | | |
| 20 | Montageanordnung | | |

## Patentansprüche

1. Drehaufnahme (2) für ein Werkstück (10), insbesondere eine Rohrschlangenanordnung, mit einer das Werkstück umgebenden Drehringanordnung (3), die eine konzentrisch zu einer Drehachse (7) verlaufende, eine geschlossene Außenkontur (15) bildende, äußere Profilringanordnung (4) aufweist, eine innere Halteanordnung (9) zur Aufnahme des Werkstücks (10) innerhalb der Außenkontur (15) und eine Koppelstruktur (8) zur Kopplung der Profilringanordnung (4) mit der Halteanordnung (9),
wobei die Drehringanordnung (3) mehrere in Umfangsrichtung koppelbare Ringsegmente (1) umfasst.

2. Drehaufnahme (2) nach Anspruch 1, wobei die Ringsegmente (1) an ihren Enden jeweils eine Koppeleinrichtung (11) aufweisen, über welche die Ringsegmente (1) lösbar aneinander fixierbar sind.

3. Drehaufnahme (2) nach Anspruch 2, wobei die Koppeleinrichtung (11) radial innerhalb der Außenkontur (15) der äußeren Profilringanordnung (4) und/oder radial außerhalb der Halteanordnung (9) angeordnet ist.

4. Drehaufnahme (2) nach Anspruch 2 oder 3, wobei die Koppeleinrichtung eine Koppelplatte (11) mit einer Koppelfläche (12) umfasst, und die Koppelplatte (11) mit von Befestigungselementen durchsetzbaren Ausnehmungen (13) versehen ist.

5. Drehaufnahme (2) nach Anspruch 2, 3 oder 4, wobei aneinander fixierbare Koppeleinrichtungen (11) jeweils entsprechende Zentrierelemente umfassen, welche ineinander eingreifend eine Montagelage der Ringsegmente (1) festlegen.

6. Drehaufnahme (2) nach einem der vorhergehenden Ansprüche, wobei die Halteanordnung ein Sattelelement (9) aufweist, das zur Aufnahme des Werkstücks (10) form- und/oder kraftschlüssig mit diesem koppelbar ist.

7. Drehaufnahme (2) nach Anspruch 6, wobei das Sattelelement als gekrümmte Sattelschale (9) ausgebildet ist.

8. Drehaufnahme (2) nach einem der vorhergehenden Ansprüche, wobei die Profilringanordnung (4) zwei parallel verlaufende Profilringsegmente (5) umfasst, die eine der folgenden Querschnittgestalten aufweisen: rohr-, halbrohr-, T-, U-, Doppel-T- oder L-förmig.

9. Montageanordnung (20) mit einer ersten und zweiten Drehaufnahme (2) nach einem der Ansprüche 1 bis 8, die koaxial zueinander angeordnet eine Rohrschlangenanordnung (10) aufnehmen und über die Drehringanordnungen (3) drehbar auf einem Drehwerk (21) angeordnet sind, so dass die Rohrschlangenanordnung (10) zur Bearbeitung in eine beliebige Drehstellung bringbar ist.

10. Montageanordnung (20) nach Anspruch 9, wobei eine dritte Drehaufnahme (25, 28) vorgesehen ist, die ausgebildet ist, axial verlaufende Enden (26) der Rohrschlangenanordnung (10) abstützend aufzunehmen, und die über wenigstens ein Ringsegment (30) mit dem Drehwerk (21) koppelbar ist.
